Europäisches Patentamt

European Patent Office

Office européen des brevets

(19)

(11) **EP 1 097 069 B1**

(12) **EUROPÄISCHE PATENTSCHRIFT**

(45) Veröffentlichungstag und Bekanntmachung des Hinweises auf die Patenterteilung:
**31.07.2002   Patentblatt 2002/31**

(21) Anmeldenummer: **99939379.6**

(22) Anmeldetag: **16.07.1999**

(51) Int Cl.$^7$: **B60T 8/00**

(86) Internationale Anmeldenummer:
**PCT/EP99/05079**

(87) Internationale Veröffentlichungsnummer:
**WO 00/03900 (27.01.2000 Gazette 2000/04)**

(54) **VERFAHREN UND VORRICHTUNG ZUM BESTIMMEN UND ERKENNEN DER KIPPGEFAHR EINES FAHRZEUGES**

METHOD AND DEVICE FOR DETERMINING AND DETECTING THE OVERTURNING HAZARD OF A VEHICLE

PROCEDE ET DISPOSITIF PERMETTANT DE DETERMINER ET DE DETECTER LE RISQUE DE BASCULEMENT D'UN VEHICULE A MOTEUR

(84) Benannte Vertragsstaaten:
**DE FR IT**

(30) Priorität: **17.07.1998   DE 19832263**
          **03.02.1999   DE 19904216**

(43) Veröffentlichungstag der Anmeldung:
**09.05.2001   Patentblatt 2001/19**

(73) Patentinhaber: **Continental Teves AG & Co. oHG 60488 Frankfurt am Main (DE)**

(72) Erfinder:
• **RIETH, Peter**
  **D-65343 Eltville (DE)**
• **ECKERT, Alfred**
  **D-55129 Mainz (DE)**
• **SCHMITTNER, Bernhard**
  **D-63741 Aschaffenburg (DE)**

(56) Entgegenhaltungen:
**EP-A- 0 758 601          DE-A- 19 623 595**

**Beschreibung**

Die Erfindung bezieht sich auf ein Verfahren und eine entsprechende Vorrichtung zum Feststellen von Änderungen des Massenschwerpunktes eines mindestens zweiachsigen und mindestens dreirädrigen Fahrzeuges, beispielsweise solche Änderungen, die durch örtliche Verschiebungen von Ladungen oder durch Änderungen der Fahrzeuggesamtmasse z.B. infolge von Fahrzeugzuladung bedingt sind. Im speziellen bezieht sich die Erfindung auf ein Verfahren und eine Vorrichtung zum präventiven Erfassen der Gefahr des Umkippens eines solchen Fahrzeuges, bei denen die genannten Schwerpunktänderungen Berücksichtigung finden und bei denen die Kippgefahr durch eine mit der Kippgefahr korrelierende kritische Zustandsgröße repräsentiert wird.

In T. D. Gillespie "Fundamentals of Vehicle Dynamics", Society of Automotive Engineers, Inc., Warrendale 1992, Kapitel 9, Seiten 309-333, werden verschiedene Modelle für Überrollunfälle beschrieben. Beginnend mit einem quasistationären Modell für ein starres Fahrzeug über ein quasistationäres Modell für ein gefedertes Fahrzeug bis hin zu dynamischen Modellen unter Berücksichtigung von Wankeigenfrequenzen werden Bedingungen für bestehende Kippgefahren angegeben.

Während es für Lastkraftwagen, Lastzüge, Busse, Kleinbusse und Geländewagen aufgrund hochliegender Schwerpunkte und/oder geringer Spurbreite bereits bei Veröffentlichung des o.g. Buches bekannt war, daß bei Kurvenfahrt mit großer Wankbewegung eine Kippgefahr besteht, hat es sich erst in jüngerer Zeit gezeigt, daß sich auch Personenkraftwagen seitlich bis zum Umkippen aufschaukeln können. Eine solche Kippgefahr wird durch unsachgemäße Beladung, beispielsweise extrem einseitig oder auf dem Fahrzeugdach, erheblich erhöht, weil die Lage des Massenschwerpunktes des Fahrzeuges nach oben oder zu einer Seite hin verlagert wird.

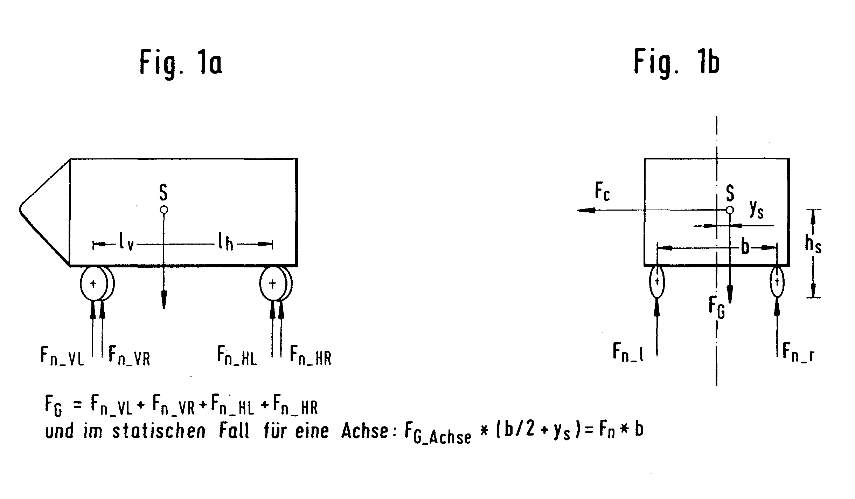

Wie in den Figuren 1a und 1b gezeigt, gelten im statischen Fall für das stabile Gleichgewicht eines Fahrzeuges die Betrachtungen der Kräfte und Momente.

Fig. 1a zeigt die Verteilung der Fahrzeug-Gewichtskraft $F_G$ auf die Radaufstandskräfte $F_{A\_xx}$. In Fig. 1b ist der seitliche Versatz $y_s$ des Schwerpunktes S aus der Fahrzeugmitte dargestellt. Der Momentensatz bezogen auf ein Rad zeigt den Einfluß der Schwerpunktsverschiebung in statischen und dynamischen Fall auf.

Tritt nun während des Fahrbetriebs eine Störkraft, wie z.B. die Fliehkraft bei Kurvenfahrt oder eine Radlastschwankung infolge einer Bodenunebenheit auf, so kann das Fahrzeug je nach Größe der Störkraft in den labilen oder instabilen Zustand geraten.

Mit einem Elektronischen-Stabilitäts-Programm (ESP), beispielsweise dem von der Anmelderin entwickelten und vertriebenen System, steht bereits ein System zur Verfügung, um kritische Fahrzustände durch den Vergleich des vom Fahrer vorgegebenen Kurses mit der tatsächlichen Bahnkurve des Fahrzeuges zu erkennenund durch gezielten Bremseneingriff zu verhindern. Zu diesem Zweck stehen als Information die Raddrehzahlen, die Querbeschleunigung, der Lenkwinkel und die Gierrate zur Verfügung. Erreicht der aus diesen Informationen bestimmte Fahrzustand einen kritischen Bereich, so wird durch einen radselektiven Bremseingriff das durch das Fahrzeugmodell des ESP-Reglers definierte Eigenlenkverhalten des Fahrzeuges aufrecht erhalten. Dieser Regelvorgang kann somit nur alle zweidimensionalen Vorgänge und Zustandsgrößen beeinflussen, d.h. Vorgänge, die sich durch Querbeschleunigung und Drehen um die Fahrzeughochachse (Gieren) beschreiben lassen.

Ändert sich nun die Lage des Schwerpunktes in Längs- und/oder Querrichtung des Fahrzeuges, z.B. infolge Beladung, so erfolgt bei ESP eine Berücksichtigung der veränderten Kurvengrenzgeschwindigkeiten automatisch dadurch, daß das im Fahrzeugmodell festgelegte Eigenlenkverhalten beibehalten werden soll. Verschiebt sich der Schwerpunkt z.B. nach hinten, so wird der erhöhten Übersteuerneigung bei Kurvenfahrt bei einer untersteuernd ausgelegten Grundabstimmung durch Reduzierung der zulässigen Kurvengeschwindigkeit entgegengewirkt.

Eine Änderung der Schwerpunktshöhe führt nun zu einem veränderten Neigungsverhalten des Fahrzeuges in Längs- und Querrichtung, Wirkt eine Querbeschleunigung auf das Fahrzeug ein, so gilt gemäß Fig. 1b die Momentenbetrachtung

$$F_c \times h_s + F_{n\_r} \times b = F_G \times (b/2 + y_s) \tag{1}$$

wobei $F_c$ die Fliehkraft aufgrund der Querbeschleunigung $a_{quer}$, $F_G$ die Schwerkraft, m die Fahrzeugmasse, $F_{n\_r,l}$ die Radaufstandskraft (Radlast) für das rechte und das linke Rad, $h_s$, $y_s$ die Höhe des Schwerpunktes, $y_s$ den seitlichen Abstand des Schwerpunktes von der Fahrzeugmitte, und b die Spurweite bezeichnen. Daraus folgt unmittelbar für die Querbeschleunigung $a_{quer}$ der Zusammenhang

$$a_{quer} = 1/h_s \times [g(b/2 + y_s) - F_{n\_r} \times b/m] \tag{2}$$

Ein Kippen des Fahrzeuges wird somit erreicht bei Überschreiten einer kritischen Querbeschleunigung, für die folgender Zusammenhang gilt

$$a_{quer,krit.} = (b/2 + y_s)/h_s \times g \qquad\qquad (3)$$

Somit hängt de kritische Querbeschleunigung direkt von der Lage des Schwerpunktes ab.

Ferner werden bei bekannten Fahrzeugbewegungssteuerungssystemen, bei denen die Fahrzeugstabilität, insbesondere bei Kurvenfahrt, erhöht werden soll, das heißt insbesondere ein seitliches Umkippen vermieden werden soll, als die Kippgefahr beschreibende kritische Zustandsgrößen im allgemeinen die Fahrzeugquerbeschleunigung oder der Wankwinkel des Fahrzeuges zugrunde gelegt.

So ist in der DE-A 197 46 889 ein System zur Erhöhung der Seitenstabilität bei Kurvenfahrt beschrieben, welches mit einer Neigungserfassungseinrichtung ausgestattet ist. Diese Neigungserfassungseinrichtung mißt entweder den Höhenunterschied zwischen rechter und linker Fahrzeugseite, oder die Querbeschleunigung des Fahrzeuges, um den Wankwinkel zwischen der Fahrzeughorizontalen und der Fahrbahnhorizontalen zu erfassen. Wird von der Neigungserfassungseinrichtung eine Kippgefahr erkannt, wird ein gegensteuerndes Giermoment erzeugt durch Abbremsen des kurvenäußeren Vorderrades.

Wie allerdings vorhergehend beschrieben, sind die zulässige Querbeschleunigung sowie der zulässige Wankwinkel empfindlich abhängig von der Lage des Fahrzeugschwerpunktes, insbesondere der Schwerpunkthöhe. Bei den im Stand der Technik bekannten gattungsgemäßen Verfahren und Vorrichtungen wird dem Fahrzeugschwerpunkt, insbesondere Schwerpunktänderungen, im Zusammenhang mit präventiver Umkippvorhersage nicht ausreichend Rechnung getragen.

Aus der EP-A-0758601 ist zwar eine Verfahren zum Erkennen der Kippgefahr eines Fahrzeugs bekannt, wobei Veränderungen des Massenschwerpunktes beim Betrieb des Fahrzeugs in einer Kurvenfahrt ermittelt werden. Das Verfahren sieht jedoch den Vergleich eines momentanen Kraftschlußwerts mit einem abgespeicherten Kraftschlußwert zur Ermittlung einer Kippgefahr vor. Darüber hinaus ist aus der DE 19623595 eine Regelung des Fahrverhaltens mittels eines Massenverteilungsmodells bekannt.

Der vorliegenden Erfindung liegt daher die Aufgabe zugrunde, ein Verfahren und eine Vorrichtung bereitzustellen, die es ermöglichen, einer Kippgefahr möglichst frühzeitig entgegenwirken zu können. Es ist dabei vorrangiges Ziel der Erfindung, eine möglichst präventive Vorhersage einer drohenden Kippgefahr eines Fahrzeuges zu ermöglichen.

Diese Aufgabe wird erfindungsgemäß dadurch gelöst, daß während einer Kurvenfahrt an mindestens zwei Rädern mit der jeweiligen Radlast korrespondierende erste Zustandsgrößen erfaßt werden, daß die erfaßten ersten Zustandsgrößen mit die jeweilige Kurvenfahrt repräsentierenden Referenzwerten verglichen werden, daß aus den Abweichungen zwischen den erfaßten ersten Zustandsgrößen und den Referenzwerten eine entsprechende Schwerpunktveränderung berechnet wird, und daß aus der entsprechenden Schwerpunktveränderung eine entsprechende geänderte kritische, die Kippgefahr repräsentierende zweite Zustandsgröße ermittelt wird.

Der Erfindung liegt die Erkenntnis zugrunde, daß die am besten geeignete Einflußgröße bei einer möglichst präventiven Erkennung der Kippgefahr eines Fahrzeuges die Lage des Fahrzeugschwerpunktes darstellt und somit die aktuelle Schwerpunktlage als Ausgangsgröße bei dem erfindungsgemäß vorgeschlagenen Verfahren und der Vorrichtung wesentlich zugrundegelegt werden.

Die Einflußgröße liefert einen unmittelbaren Hinweis auf das Vorliegen eines kritischen Kippzustandes hin. Als kippverhindernde Gegenmaßnahme kommen entweder aktive Regeleingriffe, z.B. seitens ESP, oder eine passive Warnung des Fahrers in Betracht.

Im Gegensatz zum Stand der Technik, hat die erfindungsgemäß vorgeschlagene präventive Vorgehensweise den Vorteil, daß das Fahrzeug während eines erforderlichen korrigierenden Eingriffs weiterhin lenkbar bleibt und auch der Fahrkomfort während eines aktiven Regeleingriffs noch erhalten bleibt. Ein weiterer Vorteil der Erfindung gegenüber dem Stand der Technik liegt darin, daß die möglichen Eingriffsstrategien auf eine erkannte kritische Fahrsituation hin nahezu beliebig sind, nicht zuletzt wegen der extrem vorausschauenden Erkennung. Daher läßt sich die vorliegende Erfindung ohne besondere Aufwendungen als Erweiterung oder Verbesserung einer bestehenden Fahrstabilitätsregelung, z.B. das elektronische Stabilitätsprogramm (ESP) der Anmelderin, realisieren.

Als mit der Radlast korrespondierende erste Zustandsgröße können der an der Radaufhängung meßbare Federweg, der Federdruck, der am Stoßdämpfer meßbare Dämpferdruck, der Reifeninnendruck, oder die Seitendeformation des Reifens zugrundegelegt werden.

Die Erfindung wird nachstehend anhand eines bevorzugten Ausführungsbeispiels unter Bezugnahme auf die begleitenden Zeichnungen näher erläutert, wobei gleiche Bezugszeichen gleiche Elemente bezeichnen. Im einzelnen zeigen

Fig. 1a    eine schematische Seitenansicht eines vierrädrigen Fahrzeuges beim Durchfahren einer Kurve;

Fig. 1b    eine schematische Rückansicht eines vierrädrigen Fahrzeuges ebenfalls beim Durchfahren einer Rechtskurve;

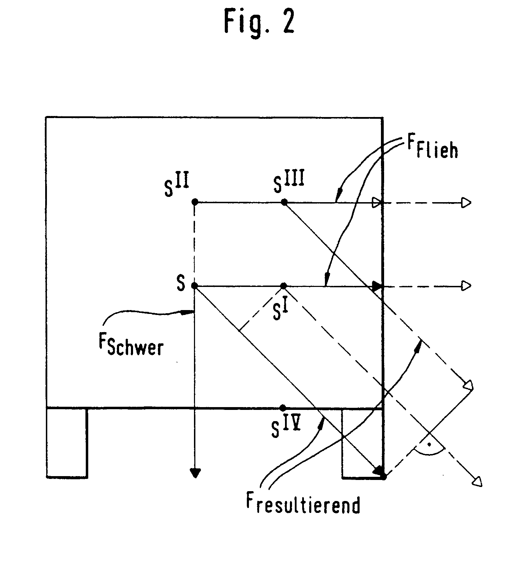

Fig. 2    eine der Fig. 1 entsprechende Rückansicht eines Fahrzeuges in einer Linkskurve zur Darstellung der fahrphysikalischen Zustandsgrößen zur Bescheibung eines Kippzustandes;

Fig. 3    anhand eines Ablaufdiagramms einen bevorzugten Funktionsablauf des erfindungsgemäßen Verfahrens und der entsprechenden Vorrichtung;

Fig. 4    eine schematische Darstellung einer bevorzugten Ausführungsform der erfindungsgemäßen Vorrichtung mit einem Federwegschalter an einem Rad und einer den Schaltzeitpunkt des Federwegschalters veranschaulichenden Kennlinie.

Das im folgenden beschriebene Ausführungsbeispiel Modifikationen in einer elektronischen Stabilitätsregelung (ESP). Im Gegensatz zu dem im Stand der Technik verwendeten zweidimensionalen Modell, wird bei der vorliegenden Erfindung ein dreidimensionales Fahrzeugmodell zugrundegelegt, bei dem neben der Querbeschleunigung und dem Gieren auch das Nicken und Wanken des Fahrzeuges berücksichtigt werden können und somit auch die Kippneigung als Wert der kritischen Zustandsgröße in Frage kommt. Eine grundsätzliche Anpassung des Fahrzeugmodells unter Berücksichtigung der aktuellen statischen Schwerpunktlage wird dabei den Regelerfolg deutlich begünstigen. Aber auch eine Reaktion nur auf das Neigungsverhalten des Fahrzeuges ergibt bereits eine deutliche Verbesserung der Stabilitätsregelung.

Die erforderlichen Informationen zur Bestimmung der Schwerpunktlage und der Fahrzeugneigung können vorzugsweise aus den Federwegänderungen gewonnen werden. Durch eine Messung des statischen Einfederweges bei Achsen ohne Höhenstandregeleinrichtung oder durch Messung des Druckes in der Höhenstandsregeleinrichtung kann die Schwerpunktlage bestimmt werden. Bei bekannter Federsteife C der Fahrwerkstragfeder läßt sich die Radaufstandskraft $F_{\_xx}$ (Fig. 1a) aus der bekannten Kraft $F_{n\_xx\_o}$ in der Konstruktionslage mit Federweg $S_{\_xx\_o}$ wie folgt bestimmen:

$$F_{n\_xx} = F_{n\_xx\_o} + K \cdot \Delta S$$

wobei $\Delta S$ die gemessene Federwegsänderung mit richtungsabhängigem Vorzeichen (positiv für Einfederung, negativ für Ausfederung) darstellt.

Eine Höhenstandsregeleinrichtung gleicht eine Einfederung aus, somit wird $\Delta S = 0$. Die für diesen Ausgleich erforderliche Sytsemdruckändeurng $\Delta p$ ist proportional der Kraftändeurng, somit gilt

$$F_{n\_xx} = F_{n\_xx\_o} + K \cdot \Delta P$$

wobei k der Proportionalitätsfaktor ist.

Der Wankwinkel wird über die unterschiedlichen Federwege auf der linken und rechten Fahrzeugseite ermittelt und der Nickwinkel entsprechend über die Federwege vorne und hinten.

Die Schwerpunkthöhe kann dann aus dem Neigungswinkel und der zugehörigen Beschleunigung berechnet werden. Aus der statischen Betrachtung ist die Lage des Schwerpunktes in Längs-und Querrichtung ($l_v, l_h, y_s$) bekannt. Die Schwerpunktshöhe läßt sich somit aus demzuvor beschriebenen Zusammenhang bei bekannter Querbeschleunigung ableiten nach

$$h_s = {}^{1}/_{aquer} * [g(^{b}/2 + Y_s) - F_{n\_r} * {}^{b}/_m]$$

oder bei bekannter Längsbeschleunigung nach

$$h_s = {}^{1}/a l\ddot{a}ngs * [\frac{Fn - VA}{m} \cdot l_v - \frac{Fn - HA}{m} \cdot l_r]$$

Ein seitlich aus der Fahrzeugmitte verschobener Schwerpunkt läßt sich durch den richtungsbezogen unterschiedlichen Wankwinkel bei einer vorliegenden Querbeschleunigung bestimmen. Somit sind beispielsweise für ein Fahrzeug mit einer Höhenstandsregelung an der Hinterachse vier Aufnehmer zur Bestimmung des Federweges und, im Falle einer radindividuellen Achsregelung, ein oder zwei Aufnehmer zur Bestimmung des Druckes in der Höhenstandsregeleinrichtung der Hinterachse erforderlich.

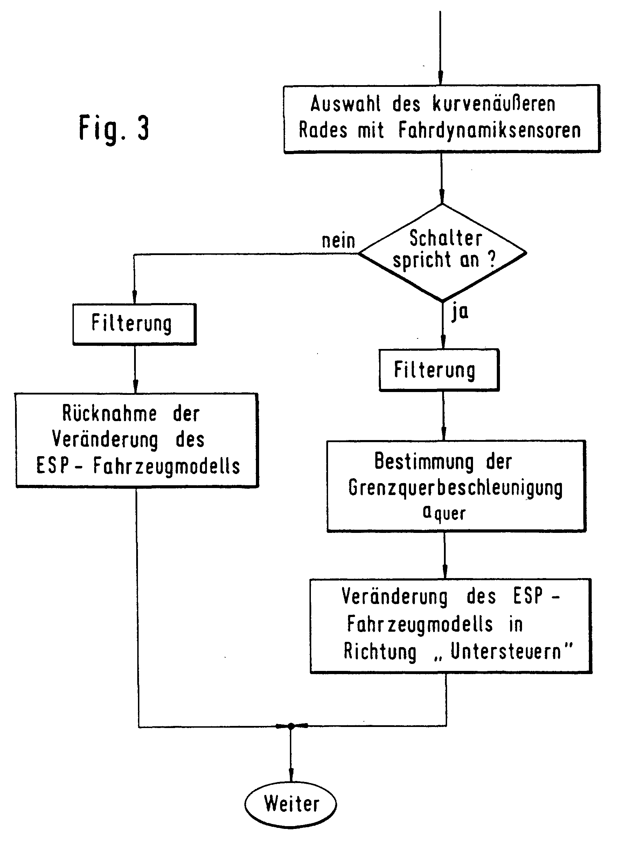

Das in Fig. 3 gezeigte Ablaufdiagramm illustriert einen exemplarischen Funktionsablauf einer modifizierten ESP-Regelung, bei der - entsprechend der genannten vereinfachten Ausführungsform der Erfindung - ein Endlagenschalter zum Einsatz kommt. Der Endlagenschalter spricht beim Überschreiten eines vorgegebenen Federweg-Schwellenwertes in einem oder mehreren der Fahrzeugräder an, d.h. in bezug auf die vorliegenden Kräfte entsprechend beim Überschreiten einer vorgegebenen Radlast. Da die Funktionsweise des Endlagenschalters somit von der Richtung der Kurvenfahrt abhängt, ist es zunächst erforderlich herauszufinden, welches (bevorzugt das Rad der Vorderachse) oder welche Räder sich auf der kurvenäußeren Seite des Fahrzeuges befinden. Denn nur die kurvenäußeren Räder können entsprechend der Kurvenneigung des Fahrzeuges in der genannten Weise überhaupt ansprechen. Die Auswahl der kurvenäußeren Räder kann mittels beim ESP bereits vorhandener fahrdynamischer Sensoren, z.B. einem Lenkwinkelsensor und/oder einem Gierratensensor, erfolgen. Generell kommen auch andere Sensoren, mit denen die Richtung einer Kurvenfahrt ermittelt werden kann in Betracht.

Spricht nun einer oder mehrere der an der kurvenäußeren Seite des Fahrzeuges befindlichen Endlagenschalter an, wird die bereits oben im Detail beschriebene Veränderung des ESP-Fahrzeugmodells vorgenommen. Vorab ist es allerdings erforderlich, die empfangenen Schaltersignale dahingehend zu überprüfen bzw. zu filtern, daß solche Signale "herausgefiltert" werden, bei denen einer oder mehrere Endlagenschalter aufgrund der Fahrbahnbeschaffenheit, z.B. aufgrund von Bodenwellen, angesprochen haben, jedoch keine Kurvenfahrt vorlag und damit auch keine Kippgefahr bestand.

Unter Berücksichtigung weiterer fahrdynamischer Größen, beispielsweise des Lenkwinkels und der Fahrzeuggeschwindigkeit, werden nun anhand der bereits genannten mathematischen Zusammenhänge eine entsprechende Schwerpunktveränderung des Fahrzeugs und aus dem geänderten Schwerpunkt eine veränderte bzw. korrigierte Grenzquergeschleunigung berechnet. Anhand der korrigierten Grenzquerbeschleunigung wird dann das ESP-Fahrzeugmodell in der Weise verändern daß das Fahrzeug vorübergehend zum "Untersteuerer" wird und somit den veränderten Schwerpunktbedingungen besser angepaßt ist.

Nach Beenden der Kurvenfahrt wird der Endlagenschalter im Normalfall nicht mehr ansprechen. Das entsprechend gefilterte Signal macht die vorübergehende Veränderung des ESP-Fahrzeugmodells wieder rückgängig und stellt somit den vor der Kurvenfahrt vorliegenden Zustand des ESP wieder her.

Bei der genannten Ausführungsform wird das ESP-Fahrzeugmodell nur vorübergehend d.h. während der Kurvenfahrt, modifiziert. Es kann allerdings auch vorgesehen sein, daß aus den genannten Signalen des Endlagenschalters auf veränderte Schwerpunktverhältnisse hin durch permanente Veränderungen des ESP-Fahrzeugmodells reagiert wird. Die o.g. Ausführungen gelten in diesem Fall analog.

Aufgrund der Kenntnis einer geänderten Schwerpunktlage kann das bei einem Elektronischen-Stabilitäts-Programm (ESP), beispielsweise dem der Anmelderin, vorliegende Fahrzeugmodell an die geänderten Schwerpunktbedingungen angepaßt werden. Zunächst ist es bei der Anpassung der ESP-Regelung erforderlich , unter Berücksichtigung der aktuellen Größe und Lage des Fahrzeugschwerpunktes eine kritische Zustandsgröße, beispielsweise eine Grenzquerbeschleunigung $aq_{Grenz}$, vorzugeben. Diese Grenzbeschleunigung kann als Parameterveränderung innerhalb des Fahrzeugmodells in Form einer

$$\text{Veränderung} = \text{Grundveränderung} + k \times f(a_{quer} - a_{quer,grenz}) \tag{4}$$

in der ESP-Regelung Berücksichtigung finden, wobei $a_{quer}$ den aktuellen Wert der Fahrzeug-Querbechleunigung und $a_{quer,grenz}$ den entsprechenden kritischen Grenzwert bezeichnet. Ferner ist 'K' ein Proportionalfaktor und $f(x)$ eine Funktion mit vorgegebener oberer und unterer Grenze, wobei für die untere Grenze gilt, daß die Veränderung nicht kleiner als Null werden darf. Der oben angegebene funktionelle Zusammenhang kann bevorzugt als P- oder PI-Regler ausgeführt sein, wobei der zweite Summand auf der rechten Seite der Gleichung (4) entweder proportional als P-Regler wirkend, d.h. gemäß dem Zusammenhang

$$k \times [abs(a_{quer}) - abs(a_{quer,\ grenz})], \tag{5}$$

oder proportional-integral als PI-Regler wirkend, d.h. gemäß dem folgenden Zusammenhang

$$k \times [abs(a_{quer}) - abs(a_{quer,\,grenz})] +$$

$$k \times Integral[abs(a_{quer}) - abs(a_{quer,\,grenz})], \tag{6}$$

ausgelegt ist. Veränderung zum "Untersteuerer" kann über die Seitensteifigkeiten definiert werden.

Im Fahrzeugmodell von ESP (Einspurmodell)

$$m \cdot v \cdot (\psi - \beta)\ F_{Seitenkraft}\ vorne + F_{seitenkraft}\ hinten$$

$$\Theta_{\psi} = F_{sv} \cdot l_v - F_{sh} \cdot l_n$$

mit

$$F_{Sv} = C_{SV} \cdot (\delta + \beta - \frac{lv \cdot \psi}{v})$$

mit

$$F_{sh} = C_{Sh} \cdot (\beta\ \frac{lh \cdot \psi}{v})$$

sind die Reifenseitensteifigkeiten $C_{Sv}$, $C_{sh}$ ,vorne und hinten enthalten.

Man kann nun diese $C_{sv,sh}$ auffassen als $C_{sv}$, $C_{sh}$ für den normalen Betrieb und $C_{1sv}$, $C_{1sh}$ als veränderliche Komponente hinzufügen.

$$C_{sv} = C_{0sv} + C_{1sv}$$

$$C_{sh} = C_{0sh} + C_{1sh}$$

Diese $C_{1sv}$, $C_{1sh}$ können nun in Abhängigkeit der Querbeschleunigung verändert werden, wie auf Seite 12 beschrieben (P, PI-Regler) und zwar

$C_{1sv}$ kleiner

$C_{1sh}$ größer

so daß ein ESP Bremseneingriff am kurvenäußeren Rad das Fahrzeug stabilisiert.

Beim Überschreiten der durch die gegebenenfalls geänderte Schwerpunktlage oder Schwerpunktmasse vorgegebenen Kurvengrenzbeschleunigung oder -geschwindigkeit kann ein kippverhindernder Eingriff, beispielsweise in Form eines Bremseingriffs, vorgenommen werden. Entsprechende Eingriffsstrategien sind beispielsweise aus 19821593.2 und 19816430.0 bekannt, auf die im vorliegenden Zusammenhang vollumfänglich Bezug genommen wird. So kann die kritische Zustandsgröße, z.B. die Querbeschleunigung, durch gezieltes Untersteuern des Fahrzeuges, insbesondere durch entsprechende Verstimmung bzw. Einstellung des Fahrzeugmodells, das den ESP-Regelungsvorgängen zugrunde liegt, wieder unterschritten werden und damit ein Kippen verhindert werden.

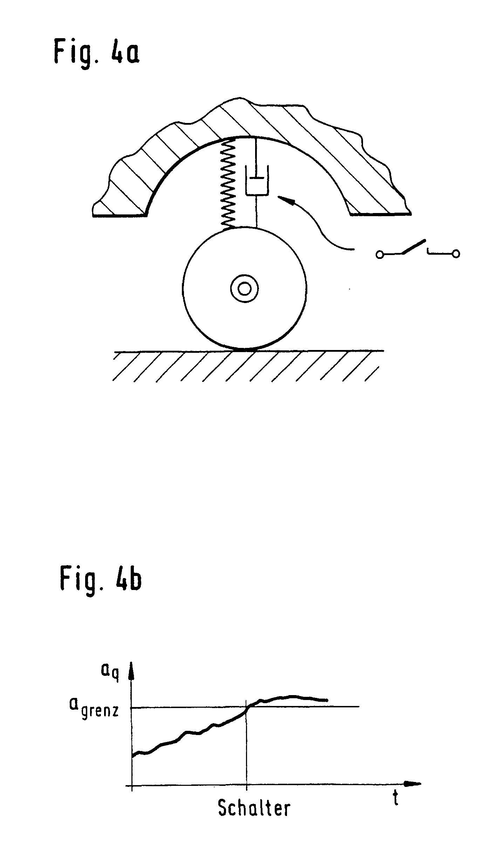

Bei einer vereinfachten Ausführungsform wird nur das Wankverhalten des Fahrzeuges berücksichtigt. Geht man ferner davon aus, daß der Schwerpunkt nur unwesentlich aus der Fahrzeuglängsachse verschoben ist, so ist eine Federweginformation pro Achse ausreichend. Bei weitgehend gleicher Schwerpunkthöhe läßt sich eine kritische Situation auch durch nur eine Federweginformation erkennen. Dabei wird das Fahrzeugmodell dem Wankverhalten angepaßt und die zulässige Querbeschleunigung unter Beibehaltung des definierten Eigenlenkverhaltens reduziert. Diese Anpassung kann sowohl analog, z.B. mittels Information durch Sensorsignal(e), als auch digital, z.B. mittels Information durch Schalter, erfolgen. Die einfachste Ausführungsform ist somit ein weiter unten anhand von Fig. 4 beschriebener Federwegschalter an einem Rad.

Eine bevorzugte Ausführungsform eines Endlagenschalters betreffend einen vereinfachten Regelansatz ist in Fig. 4a schematisch dargestellt. Dieser Regelansatz kann vorteilhaft als ESP erweitert um einen am Stoßdämpfer oder an der Feder der Radaufhängung angeordneten Endlagenschalter realisiert werden. Bei einem als Federwegschalter ausgelegten Endlagenschalter ist entsprechend dem in Fig. 4b gezeigten zeitlichen Verlauf wie folgt vorzugehen. Spricht der Schalter an mindestens einem kurvenäußeren Rad, bevorzugt am äußeren Vorderrad, an, dann wird entsprechend dem angenommenen Kennlinienverlauf die kritische Querbeschleunigung $a_{quer,grenz}$ überschritten und zur Verhinderung des weiteren Aufbaus bzw. zur Verringerung der Querbeschleunigung ein gezieltes Entgegenwirken eingeleitet. Bevorzugt wird ein Untersteuern des Fahrzeugs z.B. über eine entsprechende "Verstimmung" des ESP-Fahrzeugmodells zum "Untersteuerer", d.h. durch einen Veränderung der Fahrtrajektorie, beispielsweise durch eine Regelansatz entsprechend den Gleichungen (4) bis (6) bewirkt.

Die Veränderung kann über die Seitensteifigkeiten der Reifen definiert werden, wobei 'Untersteuern' bedeutet, daß die Seitensteifigkeit an der Vorderachse des Fahrzeugs kleiner wird.

Der Eingriff in das Fahrzeugmodell führt zur Bremsung und damit zur Reduktion der Seitenführungskraft am kurvenäußeren Rad. Hinsichtlich des physikalischen Zusammenhangs zwischen Seitenführungskraft und Bremsschlupf (Längskraft) wird im vorliegenden Zusammenhang vollumfänglich auf die deutsche Offenlegungsschrift DE-A 196 32 943 "Verfahren zum Betrieb eines Kraftfahrzeugs mit fahrstabilisierenden Bremseingriffen", Daimler-Benz AG, verwiesen.

Schließt sich der Schalter wieder, so wird diese Veränderungen über die Zeit wieder rückgängig gemacht, bzw. verlernt. Hiermit wird dieser Regelvorgang beendet.

Eine Überwachung des Schalters ist auch auf dem Wege einer Plausibilitätsbetrachtung möglich. Beispielsweise kann vorgesehen sein, daß bei Geradeausfahrt der Schalter nur über einen Mindestzeitraum von beispielsweise 200 ms geschlossen sein darf, bevor Gegenmaßnahmen zur Reduzierung der Querbeschleunigung aktiviert werden. Alternativ kann vorgesehen sein, daß das Auslösen von Gegenmaßnahmen - neben der Schalterposition - an weitere Bedingungen geknüpft ist, z.B. einem Schwellenwert für die Querbeschleunigung, beispielsweise > 0.5 - 0.7 g.

### Patentansprüche

1. Verfahren zum Erkennen der Kippgefahr eines mindestens zweiachsigen und mindestens dreirädrigen Fahrzeuges, bei dem Veränderungen des Massenschwerpunktes beim Betrieb des Fahrzeugs in einer Kurvenfahrt ermittelt werden, **gekennzeichnet** mit den Schritten,

   daß während der Kurvenfahrt an mindestens zwei Rädern mit der jeweiligen Radlast korrespondierende erste zustandsgrößen erfaßt werden,

   daß die erfaßten ersten Zustandsgrößen mit die jeweilige Kurvenfahrt repräsentierenden Referenzwerten verglichen werden, und

   daß aus den Abweichungen zwischen den erfaßten ersten Zustandsgrößen und den Referenzwerten eine entsprechende Schwerpunktveränderung berechnet wird, und

   daß aus der berechneten Schwerpunktveränderung eine entsprechend geänderte kritische, die Kippgefahr repräsentierende zweite Zustandsgröße ermittelt wird.

2. Verfahren nach Anspruch 1, **dadurch gekennzeichnet, daß** als mit der Radlast korrespondierende erste Zustandsgröße der an der Radaufhängung meßbare Federweg und/oder der Federdruck und/oder der am Stoßdämpfer meßbare Dämpferdruck und/oder der Reifeninnendruck oder die Seitendeformation des Reifens zugrundegelegt werden.

3. Verfahren nach Anspruch 1 oder 2, **dadurch gekennzeichnet, daß** als die Kippgefahr repräsentierende zweite Zustandsgröße die am Fahrzeugschwerpunkt angreifende Querbeschleunigung und/oder der Wankwinkel des Fahrzeuges und/oder der Nickwinkel des Fahrzeugs und/oder die Fahrzeuggeschwindigkeit und/oder der Lenkwinkel und/oder die Gierrate zugrundegelegt werden.

4. Vorrichtung zum Erkennen der Kippgefahr eines mindestens zweiachsigen und mindestens dreirädrigen Fahrzeuges, bei dem Mittel zum Erfassen des Fahrzustandes einer Kurvenfahrt, und Mittel zum Bestimmen von Veränderungen des Massenschwerpunktes vorgesehen sind, **gekennzeichnet durch**

   Mitteln zum Erfassen von an mindestens zwei Rädern mit der jeweiligen Radlast korrespondierenden ersten Zustandsgrößen,

   Mitteln zum Vergleichen der erfaßten ersten Zustandsgrößen mit die jeweilige Kurvenfahrt repräsentierenden Referenzwerten,

   Mitteln zum Berechnen der Schwerpunktsveränderung aus den Abweichungen zwischen den erfaßten ersten Zustandsgrößen und den Referenzwerten und

   Mittel zum Ermitteln einer die Kippgefahr repräsentierenden zweiten Zustandsgröße aus der berechneten Schwerpunktveränderung.

5. Vorrichtung nach Anspruch 4, **dadurch gekennzeichnet, daß** als mit der Radlast korrespondierende erste Zustandsgröße der an der Radaufhängung meßbare Federweg und/oder der Federdruck und/oder der am Stoßdämpfer meßbare Dämpferdruck und/oder der Reifeninnendruck und/oder die Seitendeformation des Reifens zugrundegelegt werden.

6. Vorrichtung nach Anspruch 4 oder 5, **dadurch gekennzeichnet, daß** als die Kippgefahr repräsentierende zweite Zustandsgröße die am Fahrzeugschwerpunkt angreifende Querbeschleunigung und/oder der Wankwinkel des Fahrzeuges und/oder der Nickwinkel des Fahrzeugs und/oder die Fahrzeuggeschwindigkeit und/oder der Lenkwinkel und/oder die Gierrate zugrundegelegt werden.

7. Vorrichtung nach einem der Ansprüche 4 bis 6, dadurch ge **kennzeichnet,** daß am Stoßdämpfer oder am Federelement der Radaufhängung ein Endlagenschalter vorgesehen ist, dessen Schaltpunkt über einen zeitlichen Zusammenhang mit der die Kippgefahr repräsentierenden zweiten Zustandsgröße verknüpft ist.

8. Vorrichtung nach Anspruch 7, **dadurch gekennzeichnet, daß** der Schaltzeitpunkt des Endlagenschalters an weitere Fahrzustandsbedingungen geknüpft ist.

## Claims

1. Method for detecting the rollover hazard of a vehicle which comprises at least two axles and at least three wheels, wherein variations in the center of gravity of mass are determined in the operation of the vehicle during cornering, **characterized by** the steps
   that first condition variables which correspond to the respective wheel load are detected during cornering on at least two wheels,
   that the detected first condition variables are compared to reference values representative of the respective cornering maneuver, and
   that a corresponding change in the center of gravity is calculated from the differences between the detected first condition variables and the reference values, and
   that a correspondingly changed, critical second condition variable representative of the rollover hazard is determined from the calculated center of gravity variation.

2. Method as claimed in claim 1,
   **characterized in that** the spring travel that can be measured at the wheel suspension, and/or the spring pressure, and/or the damper pressure that can be measured at the shock absorber, and/or the inside tire pressure, or the lateral deformation of the tire are taken as a basis for a first condition variable that corresponds to the wheel load.

3. Method as claimed in claim 1 or claim 2,
   **characterized in that** the transverse acceleration which acts on the center of gravity of the vehicle, and/or the roll angle of the vehicle, and/or the pitch angle of the vehicle, and/or the vehicle speed, and/or the steering angle, and/or the yaw rate are taken as a basis for the second condition variable representative of the rollover hazard.

4. Device for detecting the rollover hazard of a vehicle which comprises at least two axles and at least three wheels, wherein there is provision of a means for sensing the driving condition in a cornering maneuver and a means for determining variations in the center of gravity of mass,
   **characterized by**
   a means to detect first condition variables which correspond to the respective wheel load on at least two wheels,
   a means to compare the detected first condition variables with reference values representative of the respective cornering maneuver,
   a means to calculate the change in the center of gravity from the differences between the detected first condition variables and the reference values, and
   a means to determine a second condition variable representative of the rollover hazard from the calculated center of gravity variation.

5. Device as claimed in claim 4,
   **characterized in that** the spring travel that can be measured at the wheel suspension, and/or the spring pressure, and/or the damper pressure that can be measured at the shock absorber, and/or the inside tire pressure, and/or the lateral deformation of the tire are taken as a basis for the first condition variable that corresponds to the wheel load.

6. Device as claimed in claim 4 or claim 5,
**characterized in that** the transverse acceleration which acts on the center of gravity of the vehicle, and/or the roll angle of the vehicle, and/or the pitch angle of the vehicle, and/or the vehicle speed, and/or the steering angle, and/or the yaw rate are taken as a basis for the second condition variable representative of the rollover hazard.

7. Device as claimed in any one of claims 4 to 6,
**characterized in that** an end position switch is provided on the shock absorber or on the spring element of the wheel suspension, the switching point of which switch is linked by a time correlation to the second condition variable representative of the rollover hazard.

8. Device as claimed in claim 7,
**characterized in that** the switching point of the end position switch is linked to further driving state conditions.


**Revendications**

1. Procédé pour détecter le risque de basculement d'un véhicule à au moins deux essieux et au moins trois roues, dans lequel des variations du centre de gravité sont déterminées pendant la marche du véhicule dans une courbe, **caractérisé par** les étapes suivantes :

   en ce qu'on détecte pendant la conduite en courbe, des premières grandeurs d'état correspondant à la charge respective sur la roue, sur au moins deux roues,

   en ce qu'on compare les premières grandeurs d'état détectées à des valeurs de référence qui représentent la conduite en courbe respective, et

   en ce qu'on calcule une variation correspondante du centre de gravité à partir des écarts entre les premières grandeurs d'état détectées et les valeurs de référence, et

   en ce qu'à partir de la variation calculée du centre de gravité, on détermine une deuxième grandeur d'état critique, modifiée en conséquence, qui représente le risque de basculement.

2. Procédé selon la revendication 1, **caractérisé en ce que** l'on prend pour base comme première grandeur d'état correspondant à la charge sur la roue, la course du ressort qui peut être mesurée sur la suspension de la roue et/ou la pression du ressort et/ou la pression d'amortissement qui peut être mesurée sur l'amortisseur et/ou la pression interne du pneu ou la déformation latérale du pneu.

3. Procédé selon la revendication 1 ou 2, **caractérisé en ce qu'**on prend pour base comme deuxième grandeur d'état représentant le risque de basculement l'accélération transversale qui agit au centre de gravité du véhicule et/ou l'angle de roulis du véhicule et/ou l'angle de tangage du véhicule et/ou la vitesse du véhicule et/ou l'angle de braquage et/ou l'embardée.

4. Dispositif pour détecter le risque de basculement d'un véhicule à au moins deux essieux et au moins trois roues, dans lequel sont prévus des moyens pour détecter la situation de conduite dans une courbe, et des moyens pour déterminer des variations du centre de gravité massique, **caractérisé par**
   des moyens pour détecter des premières grandeurs d'état correspondant à la charge respective sur la roue, sur au moins deux roues,
   des moyens pour comparer les premières grandeurs d'état détectées à des valeurs de référence qui représentent la conduite en courbe respective,
   des moyens pour calculer la variation du centre de gravité à partir des écarts entre les premières grandeurs d'état détectées et les valeurs de référence, et
   des moyens pour déterminer une deuxième grandeur d'état représentant le risque de basculement, à partir de la variation calculée du centre de gravité.

5. Dispositif selon la revendication 4, **caractérisé en ce qu'**on prend pour base comme première grandeur d'état correspondant à la charge sur la roue, la course du ressort qui peut être mesurée sur la suspension de la roue et/ou la pression du ressort et/ou la pression d'amortissement qui peut être mesurée sur l'amortisseur et/ou la pression interne du pneu ou la déformation latérale du pneu.

6. Dispositif selon la revendication 4 ou 5, **caractérisé en ce qu'**on prend pour base comme deuxième grandeur d'état représentant le risque de basculement l'accélération transversale qui agit au centre de gravité du véhicule et/ou l'angle de roulis du véhicule et/ou l'angle de tangage du véhicule et/ou la vitesse du véhicule et/ou l'angle de braquage et/ou l'embardée.

7. Dispositif selon l'une des revendications 4 à 6, **caractérisé en ce qu'**il est prévu sur l'amortisseur ou sur l'élément à ressort de la suspension de la roue, un interrupteur de fin de course dont le point de commutation est corrélé, par une relation temporelle, à la deuxième grandeur d'état représentant le risque de basculement.

8. Dispositif selon la revendication 7, **caractérisé en ce que** l'instant de commutation de l'interrupteur de fin de course est lié à d'autres conditions de la situation de conduite.

Fig. 1b

Fig. 1a

$$F_G = F_{n\_VL} + F_{n\_VR} + F_{n\_HL} + F_{n\_HR}$$

und im statischen Fall für eine Achse: $F_{G\_Achse} * (b/2 + y_s) = F_n * b$

# Fig. 2

Fig. 3

Auswahl des kurvenäußeren
Rades mit Fahrdynamiksensoren

nein ← Schalter
spricht an ?

ja

Filterung

Filterung

Rücknahme der
Veränderung des
ESP - Fahrzeugmodells

Bestimmung der
Grenzquerbeschleunigung
$a_{quer}$

Veränderung des ESP -
Fahrzeugmodells in
Richtung „ Untersteuern"

Weiter

## Fig. 4a

## Fig. 4b